# EUROPEAN PATENT APPLICATION

(11) **EP 1 659 523 A1**
(43) Date of publication of application: **24.05.2006**
(21) Application number: 05025581.9
(22) Date of filing: 23.11.2005
(51) Int. Cl.: G06Q 10/00

(54) **Inbound link incoming mail stream**

(30) Priority: 23.11.2004 US 629895 P
(71) Applicant: Bowe Bell + Howell Company, Wheeling IL 60090 (US)
(72) Inventor: Lee, Raymond, Chicago, IL 60659 (US); Nieckarz, Ark, Palatine, IL 60074 (US)
(74) Representative: Stöckeler, Ferdinand

(57) **Abstract**

The present subject matter relates to automated mail processing techniques for the sorting of in-bound mail for distribution within a large company or enterprise. More particularly, the present subject matter relates to the automated processing of an incoming mail stream by transforming gathered address mail information from the in-bound mail into a final sort code for efficient sorting of in-bound mail. Internal mail delivery point data is imported from an address database of an enterprise and converted into a database compatible format. Address components based on the internal mail delivery point data are identified by filters. The identified address components from the converted internal mail delivery point data are populated into one or more fields of records in a reader database.

## Description

### Related Applications

This application claims the benefit of U.S. Provisional Application No. 60/629,895, filed on November 23, 2004, entitled "INBOUND LINK INCOMING MAIL STREAM," the disclosure of which also is entirely incorporated herein by reference.

### Technical Field

The subject matter presented herein relates to a method and system for enhancing the processing of incoming mail streams received by a delivery point sorting system, using imported address data from a company or enterprise.

### Background

Postal authorities such as the United States Post Service (USPS) utilize well established mail delivery conventions, comprised of various rules and regulations that govern the processing of outgoing mail. These rules and regulations effect the way mail is delivered across a particular country or region, and ultimately allow the postal authority to maintain a system of checks and balances for the mail processing industry. Indeed, such governance is critical in a day and age where document distribution and delivery is as commonplace as e-mail communication.

Outgoing mail may be defined as any mail piece that is sent from a source and is destined to be delivered to a recipient, or destination point, according to a recognized mail delivery convention and using recognized mailing parameters or address components. Commonly used address components for directing mail to destinations may include the recipient's name or entity name, street name, P.O. Box number, building name, postage or indicia, etc. For instance, it is commonplace for a mail piece to be marked with address components in a standard format as shown below:
Recipient Name and/or Entity Name
Recipient's address―Line 1―(e.g., building name)
Recipient's address―Line 2― (e.g., street name and number)
Recipient's address-Line 3- (e.g., P.O. Box/apartment number/suite number)
City, State Zip

In addition to the above, address components may also include information that is not readily human readable, such as two-dimensional barcode information or the like. Indeed, address components may include a combination of human-readable and machine-readable information for conveying a delivery point for the mail piece.

The zip code, which may be up to 11 digits long, is one of the primary address components relied upon to match an outgoing mail piece to a specific geographic location or region within the country. When used in combination with the other address components, the mail piece may be directed appropriately through various delivery, routing and distribution channels, and ultimately to the individual intended delivery point. However, upon delivery by the public postal service, it is not uncommon for additional processing and delivery of the mail piece to commence in order for the mail piece to be directed to the intended recipient. When further processing of a mail piece is required beyond outgoing mail processing, this is known as inbound or incoming mail processing. Mail requiring a further point of delivery within an enterprise beyond the standard outbound delivery process of a particular postal authority (e.g., United States Postal Service (USPS)) to ensure its proper placement with the delivery point is referred to as mail requiring inbound or internal mail processing. By default, the zip code is simply not specific enough to ensure the processing of inbound mail, where more specificity of location is required to ensure the mail piece is directed to the intended recipient.

Large enterprises, such as universities, hospitals, government institutions, multinational conglomerates, and many other entities having multiple employees, groups, departments, and buildings (e.g., a campus setting), rely on inbound processing to ensure that the mail piece is delivered to its final destination point or intended recipient. For instance, although the postal service may deliver all inbound mail for a university to a central receiving point, the university may have multiple recipients, buildings, departments, and units for which the inbound mail is to be directed. Moreover, the mail may need to be directed to a specific recipient or destination point according to varying rules. Perhaps a mail piece, if addressed to a Dr. Craig Neal, is to be directed to Mr. Neal's research department mailbox, while a mail piece addressed to Craig Neal, is to be directed to a personal or residential mailbox. Though outbound processing of such mail pieces may have ensured its delivery to a common delivery point-such as the campus mail room-inbound processing rules define what must occur for the mail to be directed accordingly from thereon.

Such enterprises may employ sorting devices or other mail processing tools to assist in the internal processing effort. The equipment often includes a reader device for recognizing and interpreting incoming mail pieces and an associated reader database. The database stores address components relative to the organization, and influences the ability of a reader device resident on a mail processing device to recognize the address components as they appear on incoming mail pieces.

However, even with such processing equipment, many enterprises for the most part, still rely upon intensive manual labor to distribute their mail internally. The internal mail staff of the enterprise, having an understanding of the varying business and people dynamics relative to the enterprise, may still perform recognition of difficult internal addresses or mail stops without the help of any automation equipment. Even when the enterprise requests that the automation equipment be configured with respect to organizational rules, this is often costly due to the tedious customization effort that must be employed by the automation equipment service provider to upgrade or produce an effective reader device database. The automation difficulties multiply as organizations, and attendant delivery point data frequently change over time, e.g. as personnel come and go, as people or departments move, as the enterprise grows, etc.

To address the problems described above, more efficient schemes for configuring an inbound mail processing device such as a sorter system, to process internal mail are needed. Also, more efficient techniques are needed for allowing an inbound mail processing device having recognition capability, such as a sorter, to be easily adapted to handle the unique internal mail routing or delivery schemes relative to a given enterprise. As such, less customization of the inbound processing device database is required.

### Summary

The teachings herein alleviate one or more of the above noted problems through the utilization of an inbound database importer for importing internal mail delivery point data from an enterprise's database, to create a reader database containing various address components that may exist on the mail envelope. Also, the inbound database importer accounts for various internal mail processing rules defined by the enterprise to create internal address groups that can be used to assign destination bins according to a sort scheme. This sort scheme is then used by the inbound processing device, such as a sorter, to better ensure that incoming mail pieces are directed to the intended delivery point within an enterprise.

An inbound reader is implemented to recognize every address component including but not limited to a recipient's name, box number, suite or room number, department name, mail stop, etc. Each address component can be separately located and matched to the individual field in a reader database according to the rule base from an individual enterprise to fulfill its internal mail delivery requirements. In addition to importing the internal address database of an enterprise to create a reader database containing various address components that can exist on the mail envelope, the import database utility also creates internal address groups that can be easily used to assign destination bins in a sort scheme.

In accord with the present concepts disclosed herein, there is provided a method for producing a reader database for use in sorting addressed mail. The method entails importing internal mail delivery point data from an address database of an enterprise. The method also involves populating a plurality of records for internal mail delivery destination points of the enterprise in a reader database, based on the internal mail delivery point data. According to other aspects of the disclosed subject matter, an internal mail delivery sort identification is assigned for use in controlling sorting of mailpieces for a respective delivery point with each record populated in the reader database.

Also disclosed is a method involving producing a reader database for use in the sorting addressed mail and automatically sorting addressed mail. The production of the reader database includes steps of importing internal mail delivery destination point data from an enterprise address database; populating a plurality of records in a reader database based on the internal mail delivery destination point data; and assigning an internal mail delivery sort identification with each record populated in the reader database. The automatic sorting involves receiving a stream of unsorted addressed mail and detecting one or more readable address components of the addressed mail on each mailpiece in the unsorted addressed mail. At least one detected readable address component read from each mailpiece is matched to a record populated in the reader database, and a sort identification is identified for each mailpiece from the matched record in the reader database.

It is also desirable to provide a computer readable medium bearing instructions for importing internal mail delivery point data. The instructions, when executed, are arranged to cause one or more processors to perform the step of importing internal mail delivery point data from an address database of an enterprise by way of an input processing parser module and converting the internal mail delivery point data into a database compatible format. Address components based on the internal mail delivery point data are identified by way of one or more filter modules. Identified address components, from the converted internal mail delivery point data, are populated into one or more fields of records in a mail reader database.

Additional advantages and aspects of the present subject matter will become readily apparent to those skilled in the art from the following detailed description, wherein embodiments of the present subject matter are shown and described, simply by way of illustration of the best mode contemplated for practicing the present subject matter. As will be described, the present subject matter is capable of other and different embodiments, and its several details are susceptible of modification in various obvious respects, all without departing from the spirit of the present subject matter. Accordingly, the drawings and description are to be regarded as illustrative in nature, and not limitative.

### Brief Description of the Drawings

The following detailed description of the embodiments of the present subject matter can best be understood when read in conjunction with the following drawings, in which the various features are not necessarily drawn to scale but rather are drawn as to best illustrate the pertinent features, and in which like reference numerals are employed throughout to designate similar features.

Fig. 1 depicts an exemplary high-level block diagram of a mail processing device;

Fig. 2 depicts a plurality of address components that may appear on an incoming mail piece;

Fig. 3 depicts various data mapping scenarios that may occur between an organizational data record and a reader database record;

Fig. 4 depicts an exemplary high-level diagram of a process by which inbound mail may be processed once received at a delivery point;

Fig. 5 depicts an example mapping process performed by a database importer for configuring a reader database operating in connection with the inbound mail processing device;

Fig. 6 depicts an example flowchart of a filter to be executed by the database importer for properly mapping an organizational database file according to the customer's defined rules; and

Fig. 7 depicts a graphical user interface by which a user may configure a database importer to process internal mail delivery point data.

### Detailed Description

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and circuitry have been described at a relatively high-level, without detail, in order to avoid unnecessarily obscuring aspects of the present teachings.

The concepts described herein pertain to document processing, and more specifically to the processing of documents having one or more address components, which are to be directed internally within an enterprise to a designated delivery or destination point. Mail requiring a further point of delivery within an enterprise beyond the standard outbound delivery process of a particular postal authority (e.g., United States Postal Service (USPS)) to ensure its proper placement with the delivery point will be referred to herein as mail requiring inbound or internal mail processing. Moreover, as described herein, an address component refers to any human or machine readable marking that is placed upon a mail piece according to a generally accepted postal authority addressing convention for indicating a delivery point, or indicating a sender. Commonly used address components for directing mail to a destination point include but are not limited to the recipient's name or entity name, street name, P.O. Box number, building name, postage or indicia, bar code, etc. The processing example discussed below focuses on reading those components that the enterprise may hope to use in order to resolve delivery point identification with a finer granularity than may be possible with zip codes.

Generally, mail pieces are received by an enterprise as an incoming mail stream, and are handled by a central mail room or mail processing facility for internal delivery and distribution. Alternatively, an enterprise may have decentralized mail rooms spread throughout the enterprise for which to process inbound mailings. An incoming mail stream may be defined as one or more mail pieces having varying profiles or characteristics (e.g., types: envelopes, magazines, packages, delivery method: inter-office, inbound; characteristics: time of receipt), that are received by an enterprise for direction to a specific delivery point within that enterprise. The destination point may include a specific recipient having a last name and first name designation, and corresponding address information. Alternatively, the destination point may include a specific entity, such as the general name of a company, or a specific department within an enterprise (e.g., Attention: Payment Processing Department).

Many enterprises utilize an internal database for storing address information pertaining to the various recipients or entities that receive mail within the enterprise. They may also utilize the database to retain address information pertaining to the various senders of mail to the enterprise, such as those who are frequent mailers. The way in which one enterprise collects and stores address information often is different from another enterprise. Also, the level of importance given to a particular address component for directing mail to its destination point may differ from one enterprise to the next.

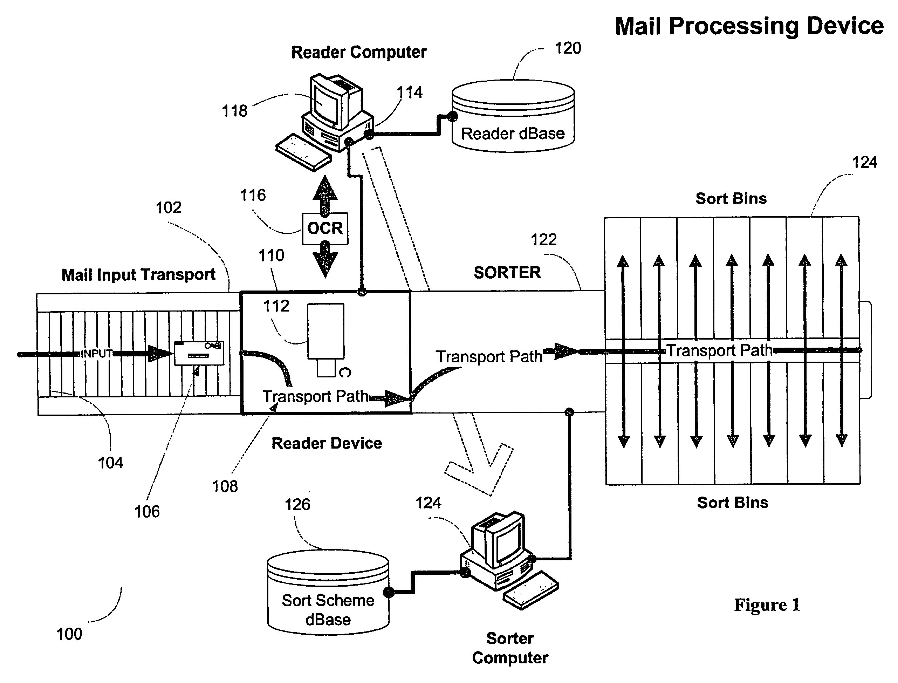

In the case of an enterprise such as a university or large company, the different mail pieces comprising the incoming mail stream may need to be directed to different people, departments, groups, P.O. boxes or even buildings based upon how the mail is addressed. Conceivably, the larger an enterprise is with its myriad of departments, groups, buildings or campuses, the more complex is the task of processing incoming mail streams for direction to the internal destination point. Obvious address designations, where the intended delivery point is clear-cut, pose no major challenge to an enterprise's mail processing facility and staff. However, to handle more complex mail processing requirements, especially given the often large volumes of incoming mail, mail processing devices such as that illustrated in Fig. 1, are employed.

Fig. 1 depicts an example of a mail processing system 100, such as a sorter system, for handling incoming streams of mail. The mail processing system 100 may include a mail input transport component 102, consisting of a grooved belt drive or conveyor belt system 104 for transporting a mail piece 106 and aligning it properly with a transport path 108. The transport path 108 defines the general direction that an incoming mail piece is guided along during its processing by the mail processing system 100.

Coupled to the mail input transport component 102, is an image scanning or reader device 110, equipped with an imaging device such as an optical scanner or camera 112. The reader 112 scans or images a mail piece, or at least the various destination address components on the mail piece, as it is processed by the mail processing system 100 along the transport path 108. Typically, the reader device 110 is placed upstream along the transport path 108 so that the address components can be scanned early on in the processing phase, and subsequently recognized or tracked against recognized data records using optical character recognition technology (OCR) 116. Typical OCR systems 116 include the optical scanner 112 for reading text, and sophisticated software for analyzing images. Alternatively, the OCR system may include a combination of hardware (e.g., specialized circuit boards) and software to recognize characters, or can be executed entirely through software. Those skilled in the art will recognize that various OCR systems may be employed by the reader device 110 for the purpose of recognizing a plurality of address components residing on the mail piece 106.

The reader device 110 may be controlled by a reader computer 114, which as described above, may or may not execute the OCR utility 116. Generally, the reader computer 114 is capable of executing various operating system mechanisms that control the behavior of the reader device 110. The reader computer 110 may also include a monitor 118 capable of rendering a graphical user interface to a user of the mail processing system 100 for accessing, interpreting, and depicting the various images scanned by the reader device 110. Coupled to, or resident upon the reader computer 114, is a reader database 120, which contains data records of the plurality of recognized address components that can exist on a mail piece. Generally, the reader database must be customized from one enterprise to the next to include an enterprise's commonly known address components. When a mail piece is imaged, and OCR technology is used for recognizing the physical address components on the mail piece, the address components may be compared to the data records within the reader database to identify if the mail piece is a match.

A match, or proper identification of the mail piece, allows a sorter component 122 to understand how a mail piece within the incoming mail stream is to be sorted and subsequently directed to a plurality of sort bins for internal delivery. Matching may be performed, for instance, through the usage of keyword matching. Keyword matching allows the OCR utility to pinpoint specific words of interest to be extracted when detected on a mail piece. For instance, to identify a P.O. Box Number, the reader firstly looks for POB, P.O. Box, Box No., or Box in the reader database, then the reader can find the actual numeric value of the post office box for matching during mail processing. Another example is name identification, which in usually preceded by Mr., Mrs., Ms., or some other prefix. The prefix acts as a keyword that triggers the OCR utility that a name is likely to follow. Variations of keywords, as described herein, may be processed by the reader device through the usage of an alias table.

In certain embodiments, the sorter or reader has the capability of printing identifying sort marks on each mail piece within the given mail stream to further enhance the internal delivery capacity of the enterprise. This is particularly useful for placing re-direct requests on a given mail piece to ensure that the sorter narrowly directs the mailpiece to a recipient based on function, or to accommodate office changes, position changes, etc. In other embodiments, the sorter may be equipped with various other sensors or detection devices, such a device for detecting checks or credit cards, special inserts, security mechanisms, etc. These devices are not shown for the sake of simplicity.

To control the sorter component 122, a sorter computer 124 is used, which has access to a sort scheme database 126. The sort scheme database 126 contains one or more sort scheme files, which control how the sorter directs the mail piece. The sort scheme, as it is commonly referred to in the art, is a computer-executable set of instructions which are usually customized from one enterprise to the next according to each enterprise's unique internal mail delivery requirements and/or rules. As such, the reader device 110 and accessible reader database 120 provides the mail processing system 100 with the ability to determine which mail piece to sort, while the sorter component 122 and accessible sort scheme database provides the mail processing system 100 with the ability to determine how an incoming mail piece 106 is to be sorted.

Various configurations of devices and systems for processing incoming mail streams are well known in the art. The useful exemplary methods disclosed herein are not limited to any particular mail processing device or configuration. Indeed, any type of mail processing device, sorter, reader, input transport mechanism, and other devices or systems associated with mail processing are useable. Those skilled in the art will appreciate that the examplary techniques to be described herein allow for much easier customization of a reader database 120 in accordance with the unique delivery requirements or rules of an enterprise. As such, the extensive time, money, and human resources often invested by an enterprise or mail processing device vendor hired by the enterprise to customize such databases―and hence improve the effectiveness of the mail processing system-is significantly minimized.

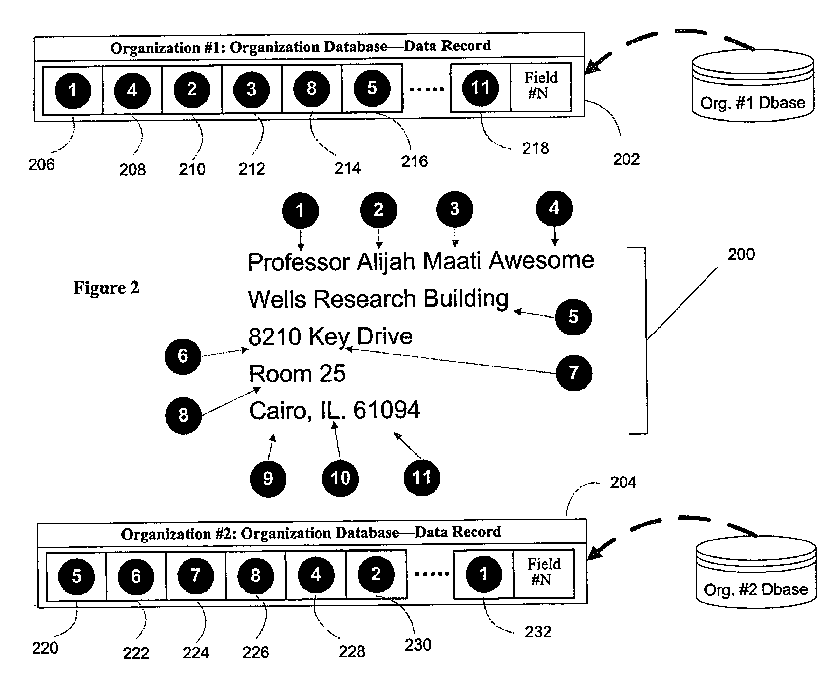

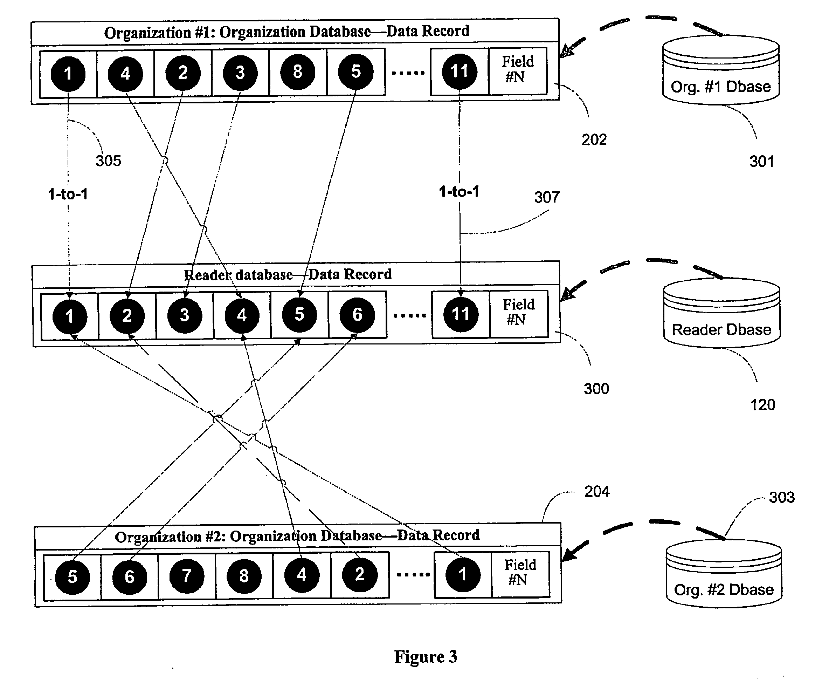

To better understand the dynamics behind this issue, the description now proceeds with a discussion of Fig. 2 and Fig. 3, which provide some background into the difficulties often faced by enterprises in customizing a reader database 120 for utilization by a mail processing system 100. In particular enterprise data records having differing formats are presented. As used herein, the data records referenced in the figures may refer to the data records of two different enterprises (e.g., different companies) or to two different groups within one enterprise. The scenarios described with respect to Fig. 2 and 3 are of an exemplary nature only, and do not limit the scope and realm of applications of the novel methods and techniques presented herein.

In Fig. 2, a plurality of exemplary address components 200 that may be found on an incoming mail piece are shown. Also depicted in the figure are examples of different database records 202 and 204 of an enterprise for representing the address components 200 as stored within a respective database of an enterprise according to a common format. Generally, data records conform to a standard format, such as the Comma Separated Value (CSV) file format, which allows records within a database to be parsed using comma delimiters. Of course, other file formats may be used by an enterprise such as XML. Indeed, any pseudo-standard file format that facilitates the exchange of data between disparate applications may be used by an enterprise.

The first address component, Label 1, represents the title or designation of an intended recipient, while Labels 2, 3 and 4 represent the first, middle, and last name of the recipient respectively. Labels 5, 6, 7 and 8 represent the building name, street number, street address and room or suite number respectively, while Labels 9, 10 and 11 represent the city, state and zip code (five to eleven digit). Observation of the first database record 202 shows that the format of the various address components is completely different than the format of the second database record 204 though they both convey the same address information. In the first 202 the fields are populated in the following order:
1. "Designation or title" 206
2. "Last name" 208
3. "First name" 210
4. "Middle name" 212
5. "Room or suite designation" 214
6. "Building name" 216
   ... followed by...
7. "Zip code" 218
In contrast, the second database record 204 is populated in the following order:
1. "Building name" 220
2. "Street number" 222
3. "Street name" 224
4. "Room or suite designation" 226
5. "Last name" 228
6. "First name" 230
   ... followed by...
7. "Designation or title" 218

The subtleties in order between the data records provide some insight into not only how the enterprises collect data, but more so the importance or priority the different enterprises place upon one address component versus another for developing appropriate incoming mail distribution schemes. If for example, these records were utilized for programining a reader database 120 and corresponding sort scheme database 126 to ultimately control how mail is sorted for distribution within the enterprise, the first data record 202 may result in a preference of sort by title or designation 206, while the second record 204 would be firstly (preferentially) sorted by building name 220. Again, the way address information is organized may differ vastly from one enterprise to another.

With respect now to Fig. 3, the complexity involved in the above described scenario becomes more apparent. In Fig. 3, the same data records 202 and 204 for the address components 200 are shown in contrast to a reader database data record 300. The reader database 120 provides a reader device 110 with the information it requires to recognize incoming mail pieces as they are moved upstream through the mail processing system 100, and eventually sorted according to the sort scheme executed by the sorter 122. When an enterprise purchases a mail processing system 100 that is equipped with a reader device 110 and reader database 120, the reader database conforms to a proprietary format designed by the mail processing device vendor. The format of the reader database record 300 will be based on the design requirements of the reader device 110 and/or sorter device 122, and may or may not include one or more fields or delimiters common to the data record format of the databases 301 and 303 of the enterprise. Thus, when an enterprise wants to utilize the mail processing system 100 and corresponding reader 118, the reader database 120 must be appropriately populated, or mapped, with the corresponding database records 202 and 204 of two organizations.

This is depicted in Fig. 3 by indicating the different order of data field population of the reader database record 300 versus that of the database records 202 and 204 of the organizations. For instance, for the first data record 202 corresponding to the first enterprise, the order in which the address components are stored is different than that of the reader database record 300. If the data record 202 were to be converted or mapped to the fields of the reader database, only certain fields of the database record 202 would easily translate, i.e., result in a one-to-one mapping process. This would be fields 305 and 307, while all other fields of the database records are not easily translatable to match the format of a reader database record 300. Similarly, for the second data record 204 corresponding to the second enterprise, none of the fields of the database record 204 translate into the fields required for populating the reader database 120. This phenomenon results in the following requirements: (1) the enterprise must convert the format of each data record within its database to that of the proprietary reader database 120 to ensure the data records may be mapped to the reader database 120. Of course, this is not a simple task, especially given that the enterprise's database may comprise hundreds if not thousands of records; (2) the mail processing device vendor must customize the reader database for every individual enterprise it sells a device to. Inevitably, extensive customization must be performed to translate an existing store house of address data for a given enterprise into a properly formatted reader database 120.

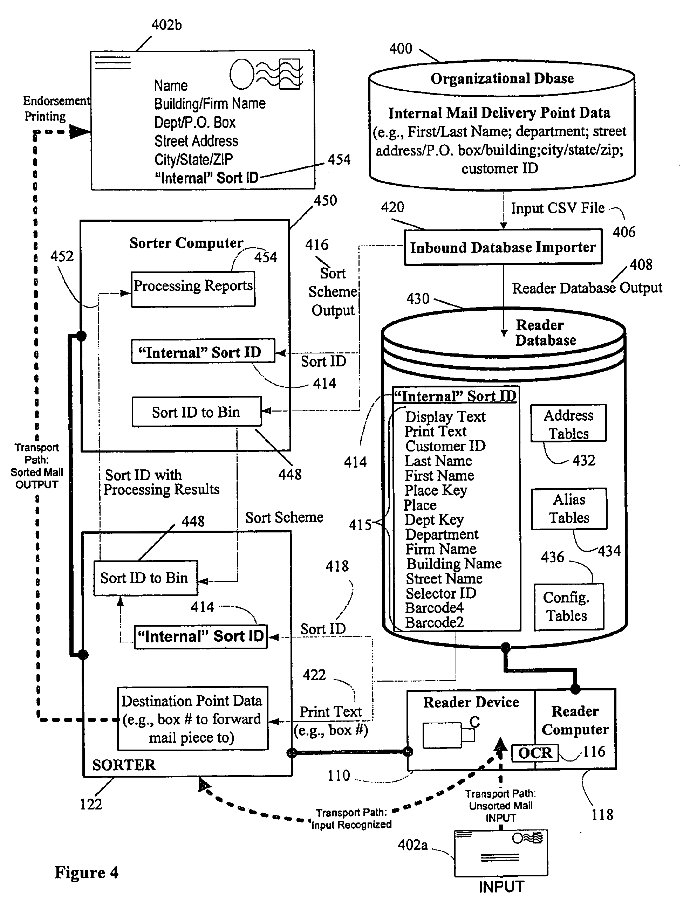

To address such issues, a customizable inbound database importer is utilized to allow for easier conversion of each enterprise's existing address database-comprising a myriad of address components-into a reader database is unique to the enterprise and tailored to the needs of the particular enterprise. Through the usage of the inbound database importer, the often cumbersome mail processing device customization requirements prevalent within different enterprises to achieve more effective inbound mail processing can be accomplished more easily. This is discussed by way of example in more detail with respect to Fig. 4.

As shown in Fig. 4, an enterprise database 400 stores a plurality of data records representative of the various address components that may appear on an incoming mail piece. These data records are usually compiled by the enterprise using a commercial application such as PeopleSoft® , or they may be collected from recording various address components of a customer's incoming stream of envelopes 410 via a reader device 110. The address components specified in the database 400 may include both sender and destination point address components. As described herein, such data is known as internal mail delivery point data, and may include information such as recipient names, department or division names, group or team names, box numbers, mail stops, employee identification numbers, street addresses, building names, city names, state and ZIP codes. In most cases, a commercially available database management system can be used to export the enterprise database to a comma separated format (CSV) file, which is a standard file format with multiple lines. Each line consists of address components separated by commas.

In a specific example, a programmable inbound database importer 420 utilizes the CSV file as input for populating the records of a reader database 430 in a format suitable for interpretation by a reader device 436 (event 406). After parsing the CSV file to format the individual internal mail delivery point data (e.g., one or more address components) for populations thereof into the various reader database records 415 (event 408), each record in the reader database 430 is associated with a respective internal sort ID 414. The internal sort ID 414 can be an arbitrary alphanumeric identifier determined by the reader computer 118, one of the address components on the incoming mail piece 410, or it can be an identification code determined by the enterprise (e.g., by a mail room professional 248). Regardless of the source of this internal sort ID 414, this ID 414 acts as a key that allows the reader device 110 to uniquely identify each address record when the corresponding mail image 402 is read, such as through the usage of an OCR utility 116. The scanned components may be subsequently matched with one of the reader records in the database 430 during a mail processing run. Additionally, the import database utility 420 may also designate inbound mailings to internal address groups that can be easily used to assign destination bins in a sort scheme 448 (event 416).

In addition to housing the main sortation table 415 used for associating each customer address record with a sort ID 414 in the sort scheme, the reader database 430 may also have an alias table 434 containing spelling variations of different people names and address keywords. Hence, in the earlier example discussed with respect to Fig. 2, Dr., Doctor, Prof. and Professor Alijah Maati Awesome are all known as synonymous designations or aliases for the same person. Likewise, mailings addressed to the "Residence Life Building," but designated on the mail piece as the "Res. Life Center," may be appropriately recognized. The reader database 430 may also contain configuration tables 436 that control the generation of the records in the database 430 and define how a match with an address should be scored, and an address table 432 that may be used to reinforce a reader recognition decision by limiting the range of lines within the address block that may be used for recognition purposes to only those most likely to contain useful address components.

Of course alias tables, configuration tables, and address tables are well known in the art, and are described here by way of example only. The usage of such tables is not limited to any single function as their usage may vary depending on the unique characteristics of the mail processing device or the enterprise. Those skilled in the art will recognize that various other data integrity tools and verification methods may be used in conjunction with or instead of the alias table, configuration table, and address table without limiting the scope of the novel concepts described herein.

When the reader device 110 identifies a mail piece 402 with a sufficient level of confidence, the reader device 110 returns the internal sort ID 414 associated with the address components on the mail piece 402a to the sorter device 122 (event 418). The sort ID 414 allows the sorter 122 to make a final sort decision of this mail envelope based on a predetermined customer's rule base, as discussed previously (event 448). This rule base can be implemented as a simple sort scheme mapping each sort ID 414 to a destination bin 124 or a combination of sort scheme logic with other mail attributes such as height, weight, thickness and length. Those skilled in the art will recognize that sort schemes vary from one enterprise to the next based on the myriad of user requirements within the enterprise. Also, the sort scheme often changes over time with various changes to the organization. The novel examples discussed herein, while allowing for more manageable customization of the sortation rules, are not limited to any specific sort scheme configuration or mechanism.

Depending on the preferences of the enterprise, the reader device 110 may also return a print text string with the internal sort ID to the sorter 122 (event 422). The sorter 122 may then print this print text string on the endorsement line 454 of the mail document 402b associated with the sort ID 414 as it is transported downstream via the transport path 108 of the mail processing system 100. The print text on each sorted piece can serve the purpose of identifying the source of sort decision resulting from the inbound database importer 420 processing the enterprise database 400. This can be very useful for allowing the reader database 430, and consequently the mail processing system 100 to be customized easily to adapt to any rule or preference changes. Furthermore, reference to a particular internal sort ID allows for more efficient sort error correction.

All sort schemes and report generation are executed with the aid of a separate computing system which is the sorter computer 124. The transport control system, which controls the movement of the transport path 108, returns the final sort decision and other relevant processing data related to a mail document to the sorter computer (event 452). In this way, the sorter computer 450 can maintain logistical information pertaining to each mail piece or mail run, and generate processing reports 454 as needed. A graphical user interface used in conjunction with standard sorter control software (not shown) may be used to facilitate the display of logistical information, and to control various functions and operations of the sorting device 122. Various operating systems, software and the like are well known in the art for allowing a user to control and manipulate the functions of the sorter device.

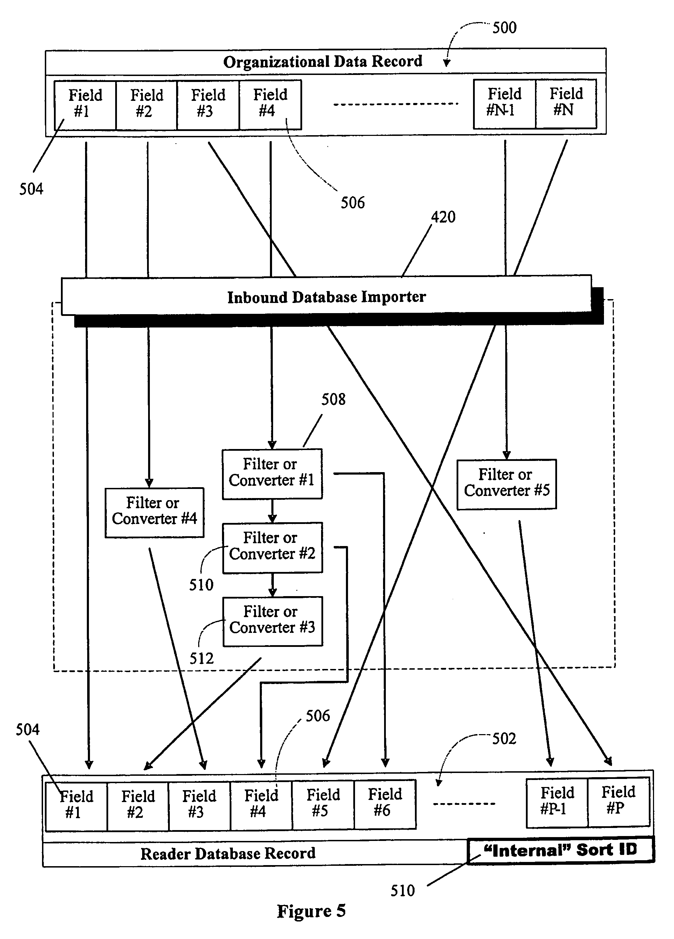

Turning now to Figure 5, a high-level depiction of the programmable database importer 420 is shown. The database importer 420 allows for the extraction and mapping of each comma separated field of each organizational data record line 500 of the enterprise to a corresponding field in the reader database 502. Each reader data record may then be assigned to an internal sort ID 510. To extract useful information from the enterprise's address data, custom-made filter(s) or converters are applied so that each comma separated field 500 is preprocessed to locate address components that are useful for the reader device to perform identification of mail pieces. By useful, it is meant that the data comprising the enterprise's database may be properly mapped to the reader database to enable the reader device to function effectively. Furthermore, the filters may be created to allow the various address components of the enterprise's database to be associated with a processing rule (e.g., a specific sort scheme or preference of the enterprise) that affects the sort behavior of the mail processing system 100.

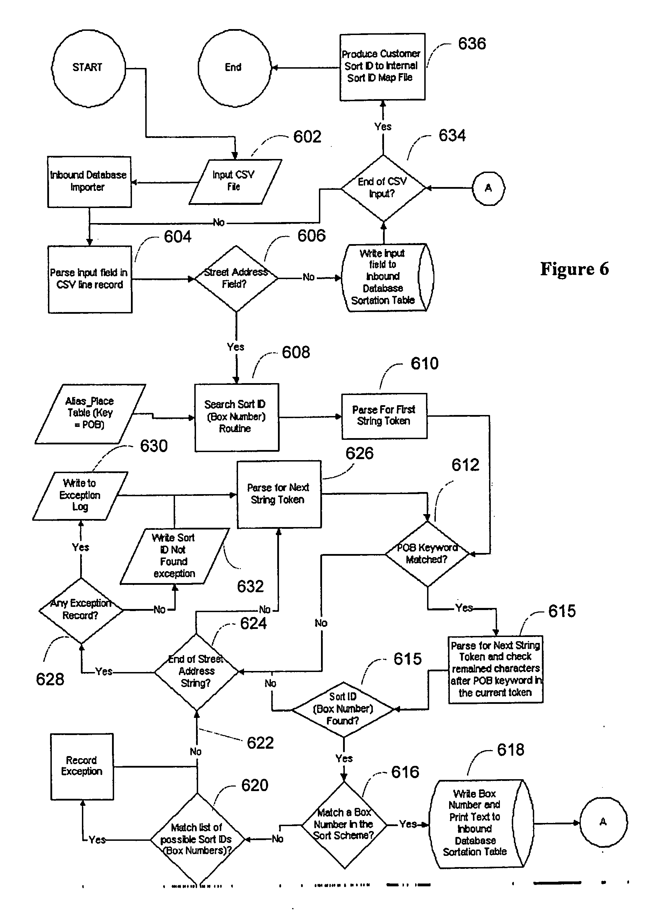

By way of example in Fig. 5, while the mapping of field #1 504 is simple in Figure 5 (i.e., simple one-to-one mapping process), field #4 504 is a street line input and the rule base for the street field can have three filters 508, 510 and 512. The first filter 508 will be for box number search-identifying mail pieces having a P.O. Box designation. The second filter 510 is for building name identification―identifying the name or the one or more buildings related to the enterprise. The third filter 512 for eliminating invalid street line. Fig. 6 shows an example of one filter or converter that may be used for identifying box number in the address line of a customer's address record. The steps illustrated in Fig. 6 are self explanatory when viewed by one skilled in the art.

In Fig. 6, once the inbound database importer 420 receives an organizational database file to be mapped (event 602), it parses the data records (event 604) and searches for street address fields (event 606)―the fields being stored as a literal text string. If a street address field is found, the box number is searched for in the first text string token, corresponding to events 608 and 610. If the first text string reveals the P.O. Box keyword is found, then the next text string immediately following the P.O. Box is checked against the existing reader database records (e.g., Sort_ID match) (events 612 and 614). When a match occurs (event 615), another check is performed to determine if the P.O. Box is associated with any existing sort schemes (event 616)―if yes, the box number is written to the reader database (event 618); if no, the P.O. Box is checked against a list of possible sort scheme matches (event 620). In the case of still no match (event 622), the next immediate text string is checked, and if there are still strings within the text string (event 624), the next string is parsed (event 626) and the keyword search process (event 612) is repeated.

In the instance, however, that the P.O. Box keyword is not found (event 612), the string is checked to determine if it is the end of a street address (event 624). If so, this indicates that no P.O. Box was indicated within the address string, and an exception check is performed (event 628). If an exception is found, the exception is logged (event 630), while no exception found triggers no matching of information to the database (event 632). From there on the above described process is performed for any remaining address text strings until all have been checked (event 634).

Finally, when the parsed data does not match any sort ids, that data is associated with a unique internal sort id for identification at later points in processing of the data, or for future recognition purposes (event 636). Again, by associating data to an internal sort id accordingly, the data may be correlated to any customer id already assigned to the data for easier conversion. Furthermore, the internal sort id my be used to link an identified address component to a specific sort scheme by referencing the sort id in via the sort scheme database. Various other implementations of the logical means of identifying the P.O. Box may be contemplated by those skilled in the art to accomplish the same end. The flowchart of Fig. 6 is of an exemplary nature.

Hence, the filters are custom made algorithms that allow an enterprise's rule base to be implemented. The filters are computer executable modules that define how a certain address component, when detected by the inbound importer 420, is to be parsed and utilized for effectively mapping the address component or any other internal mail delivery point data to the reader database in a format executable by the reader database. Suggested in another way, the one or more filters act as "logic" that define how the inbound importer 420 maps the client address database (input) appropriately to the reader database (output). Those skilled in the art will appreciate that the filters, which are customizable according to the specific needs of each individual enterprise, allow the mail processing device vendor or enterprise itself to more easily import an existing database of an enterprise without reliance upon extensive customization or data manipulation efforts. Indeed, the filters may be customized from one enterprise to the next, while still yielding a predictably formatter reader database output.

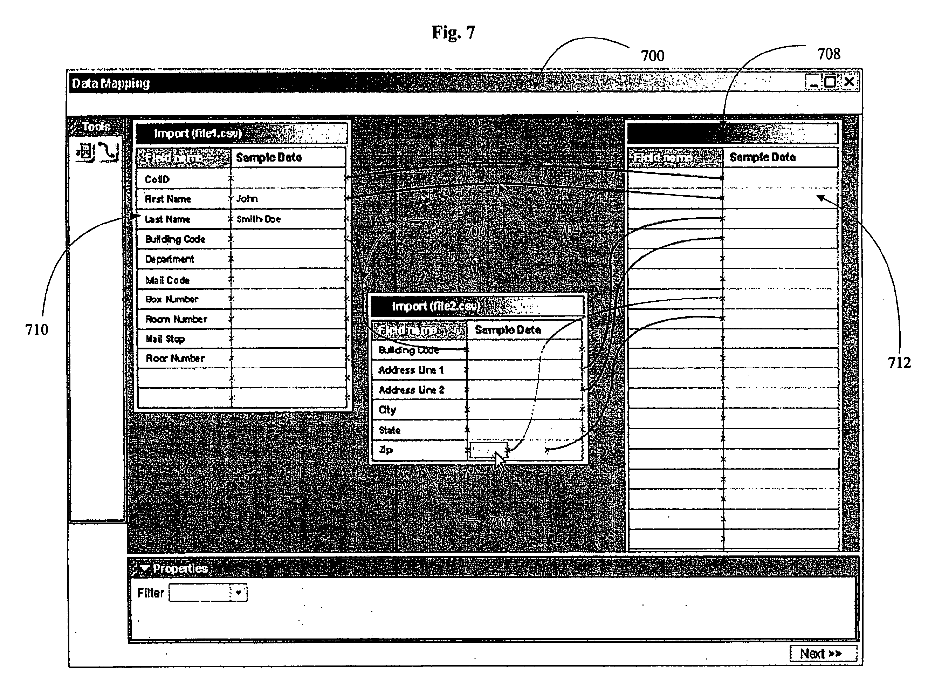

Turning now to Fig. 7, an exemplary graphical user interface 700 can be implemented to facilitate the importing, conversion and mapping process of internal mail delivery point data into properly formatted reader database records. As such, a more convenient means of converting data and applying filters to various address components may be executed by the enterprise or by the mail processing device vendor. When one or more files are selected for importation to the reader database, the headers from each file and a sample data field pertaining to that file are depicted, as shown by display windows 702 and 706. The interface 700, as shown, provides a tool by which one or more arrows may be visually dragged to connect two data fields.

So, for example, two different enterprise database files "file1.csv" and "file2.csv" are rendered to the graphical user interface as display windows 702 and 706 respectively. A third display window 708 depicts the various fields that comprise a reader database record. Arrow 704 shows a direct mapping from the first name data field 710 of filel.csv 702 to a corresponding first name field 712 of the reader database 708. Arrow 714 shows a direct mapping from the building code field of filel.csv to the building code field of file2.csv. This illustrates the capacity of one or more enterprise database files to be linked via the usage of the exporter for ultimate conversion of the files into a reader database file. Various other fields may be interconnected as well via the same process, resulting in a drag and drop user friendly interface for mapping data. The connections may be further linked to a specific sort scheme for triggering specific behavior in the sorter device upon recognition of a particular address component.

Those skilled in the art will recognize that various formats and functions for providing a graphical user interface may be employed, and that the teachings herein are not limited to any one implementation of the above described functionality. Furthermore, the graphical user interface 700 may be utilized to provide advanced data mapping functions beyond those shown in Fig. 7. Indeed the interface may provide functions for allowing a user to selectively associate a set of mapped elements with one or more customized filters, or may simply automatically select a filter for execution based on how the user connects two fields. Also, hierarchical associations relative to an enterprise, such as the relationships between different departments within a group and how they co-function, could also be indicated via the interface 700 for even greater streamlining of incoming mail streams based on group and/or dynamics of the enterprise. Ultimately, usage of a mapping tool for performing the often complex data mapping and rule development process involved in handling incoming mail streams fosters greater ease of use and execution of a mail processing device. Many of the control functions discussed above relating to the mail processing system 100 are implemented on controllers or computers, which of course may be connected for data communication via the components of a network. The hardware of such computer platforms typically is general purpose in nature, albeit with appropriate network connections for communication via the intranet, the Internet and/or other data networks.

The novel features described herein, while presented with reference to inbound mail processing, may apply to other categories of document processing as well. For example, the exemplary embodiments presented may be used in private postal applications, where all mail items need to be captured in full for invoicing and tracking. The addition of an inbound database importer as described would enable a reader device to be configured more easily for the interpretation of key line information, such as for billing by a sender's department (if available in senders line) besides sorting to the various departments of the addressee. Indeed, various other applications of the exemplary embodiments presented herein may be contemplated by those skilled in the art.

As known in the data processing and communications arts, each such general-purpose computer typically comprises at least one central processor, an internal communication bus, various types of memory (RAM, ROM, EEPROM, cache memory, etc.), disk drives or other code and data storage systems, and one or more network interface cards or ports for communication purposes. In the mail processing system 100, the computer (114 or 124) also may be coupled to a display and one or more user input devices (not shown) such as alphanumeric and other keys of a keyboard, a mouse, a trackball, etc. The display and user input element(s) together form a service-related user interface, for interactive control of the operation of the system 100. These user interface elements may be locally coupled to the particular computer 114 or 124 of system 100, for example in a workstation configuration, or the user interface elements may be remote from the computer and communicate therewith via a network in a client-server arrangement or the like.

The software functionalities involve programming, including executable code as well as associated stored data. The software code is executable by the general-purpose computer that functions as the particular computer for a control system, e.g. the sorter computer 124, the reader computer 114, inbound database importer 420 or any other controller. In operation, the executable program code and possibly the associated data are stored within the general-purpose computer platform. At other times, however, the software may be stored at other locations and/or transported for loading into the appropriate general-purpose computer system. Hence, the embodiments involve one or more software products in the form of one or more modules of code carried by at least one machine-readable medium. Execution of such code by a processor of the computer platform enables the platform to implement the importing, detecting, matching and other functions described above, in essentially the manner performed in the embodiments discussed and illustrated herein.

As used herein, terms such as computer or machine "readable medium" refer to any medium that participates in providing instructions to a processor for execution. Such a medium may take many forms, including but not limited to, non-volatile media, volatile media, and transmission media. Non-volatile media include, for example, optical or magnetic disks, such as any of the storage devices in any computer(s) operating as one of the server platforms. Volatile media include dynamic memory, such as main memory of such a computer platform. Physical transmission media include coaxial cables; copper wire and fiber optics, including the wires that comprise a bus within a computer system. Carrier-wave transmission media can take the form of electric or electromagnetic signals, or acoustic or light waves such as those generated during radio frequency (RF) and infrared (IR) data communications. Common forms of computer-readable media therefore include, for example: a floppy disk, a flexible disk, hard disk, magnetic tape, any other magnetic medium, a CD-ROM, DVD, any other optical medium, punch cards, paper tape, any other physical medium with patterns of holes, a RAM, a PROM, and EPROM, a FLASH-EPROM, any other memory chip or cartridge, a carrier wave transporting data or instructions, cables or links transporting such a carrier wave, or any other medium from which a computer can read programming code and/or data. Many of these forms of computer readable media may be involved in carrying one or more sequences of one or more instructions to a processor for execution.

While the foregoing has described what are considered to be the best mode and/or other examples, it is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings.

In the previous description, numerous specific details are set forth, such as specific materials, structures, processes, etc., in order to provide a better understanding of the present subject matter. However, the present subject matter can be practiced without resorting to the details specifically set forth herein. In other instances, well-known processing techniques and structures have not been described in order not to unnecessarily obscure the present subject matter.

Only the preferred embodiments of the present subject matter and but a few examples of its versatility are shown and described in the present disclosure. It is to be understood that the present subject matter is capable of use in various other combinations and environments and is susceptible of changes and/or modifications within the scope of the inventive concept as expressed herein.

## Claims

1. A method for producing a reader database for use in sorting addressed mail, comprising the steps of:
importing internal mail delivery point data from an address database of an enterprise; and
populating a plurality of records for internal mail delivery destination points of the enterprise in a reader database based on the internal mail delivery point data.

2. The method according to claim 1, further comprising:
assigning an internal mail delivery sort identification for use controlling sorting of mailpieces for a respective delivery point with each record populated in the reader database.

3. The method according to claim 1, wherein the step of importing internal mail delivery point data includes importing one or more of the following address identifiers: employee name, department name, division name, group name, team name, box number, mail stops, employee identification number, street address, building name, city name, state name, and zip code.

4. The method according to claim 1, wherein the step of importing internal mail delivery point data from the address database of the enterprise comprises converting the internal mail delivery point data into a comma separated format file and parsing the comma separated data so as to place the delivery point data in a format compatible with the reader database.

5. A reader database generated by the method of claim 1.

6. The reader database of claim 5, in further combination with an image scanning device.

7. A method comprising:
producing a reader database for use in sorting addressed mail, comprising the steps of:
(a) importing internal mail delivery destination point data from an enterprise address database;
(b) populating a plurality of records in a reader database based on the internal mail delivery destination point data; and
(c) assigning an internal mail delivery sort identification with each record populated in the reader database;
automatically sorting addressed mail comprising the steps of:
(i) receiving a stream of unsorted addressed mail;
(ii) detecting one or more readable address components of the addressed mail on each mailpiece in the unsorted addressed mail;
(iii) matching at least one detected readable address component read from each mailpiece to a record populated in the reader database; and
(iv) identifying a sort identification for each mailpiece from the matched record in the reader database.

8. The method of claim 7, further comprising:
(v) sorting based on identified sort identifications.

9. The method of claim 7, wherein the one or more readable address components is selected from the group consisting of name of addressee, street number, box number, suite number, room number, department name, building name and mail stop.

10. The method of claim 7, wherein the matching step (iii) comprises matching at least one detected readable address component read from each mailpiece to a record populated in the reader database, based on a predetermined rule base of the enterprise.

11. The method of claim 7, wherein the detecting step (ii) comprises detecting one or more readable address components of the addressed mail on each mailpiece in the unsorted addressed mail with a reader device.

12. The method of claim 7, further comprising the step of printing the sort identification on the mailpiece.

13. A computer system programmed to implement the method of claim 7.

14. A software product comprising executable instructions for programming a computer to implement the method of claim 5, and a machine-readable medium bearing the instructions.

15. A computer readable medium bearing instructions for importing internal mail delivery point data, the instructions, when executed, being arranged to cause one or more processors to perform the steps of:
importing internal mail delivery point data from an address database of an enterprise by way of an input processing parser module and converting the internal mail delivery point data into a database compatible format;
identifying address components based on the internal mail delivery point data by way of one or more filter modules; and
populating identified address components from the converted internal mail delivery point data into one or more fields of records in a mail reader database.

16. The computer readable medium of claim 15, further comprising the step of creating internal address groups used for assigning destination bins in a mail sorting scheme.

17. The computer readable medium of claim 15, wherein the one or more filters is capable if being manipulated by a graphical user interface.
